# EUROPÄISCHE PATENTANMELDUNG

(11) **EP 4 056 869 A1**
(43) Veröffentlichungstag der Anmeldung: **14.09.2022**
(21) Anmeldenummer: 21162270.9
(22) Anmeldetag: 12.03.2021
(51) Int. Cl.: F16G 3/04

(54) **VERBINDERELEMENT ZUM BEFESTIGEN AN EINEM ENDE EINES BANDS ODER EINES GURTS SOWIE VERFAHREN ZUR HERSTELLUNG EINES SOLCHEN VERBINDERELEMENTS**

(71) Anmelder: MATO GmbH & Co. KG, 63165 Mühlheim am Main (DE)
(72) Erfinder: Schwaiger, Julian, 63150 Heusenstamm (DE)
(74) Vertreter: Franke, Markus

(57) **Zusammenfassung**

Die vorliegende Erfindung betrifft ein Verbinderelement zum Befestigen an einem Ende eines Bands oder eines Gurts, wobei das Verbinderelement einen Grundkörper und zumindest zwei in dem Grundkörper gelagerten Krampen (5) aufweist, wobei der Grundkörper einen ersten Endabschnitt (6) und einen zweiten Endabschnitt (7) sowie einen die Endabschnitte (6, 7) verbindenden Bogenabschnitt aufweist, wobei die beiden Endabschnitte (6, 7) Durchtrittsöffnungen für die Krampen (5) aufweisen, wobei der erste Endabschnitt (6) auf einer dem Band bzw. Gurt abzuwendenden Seite eine erste Anlagefläche (12) für freie Enden (10) der jeweiligen Krampe (5) und in einem Bereich zwischen den beiden ersten Anlageflächen (12) eine erste Erhöhung (14) aufweist, wobei ein Überstand (H) der ersten Erhöhung (14) gegenüber der jeweiligen ersten Anlagefläche (12) zumindest einer Stärke (D) der Krampen (5) entspricht.

## Beschreibung

Die Erfindung betrifft ein Verbinderelement zum Befestigen an einem Ende eines Bands oder eines Gurts, insbesondere eines Förderbands oder eines Fördergurts.

Die DE 41 10 818 C1 offenbart ein Verbinderelement, das die Merkmale des Oberbegriffs des Patentanspruchs 1 aufweist. Aus der DE 41 10 818 C1 ist ein Förderbandverbinderelement mit zwei das Förderbandende zwischen sich einschließenden Verbinderschenkeln und einer diese verbindenden Öse zur Aufnahme eines durchgesteckten Kupplungsstabs offenbart, wobei die Verbinderschenkel aufeinander ausgerichtet und in Bandlängsrichtung hintereinander angeordnete Öffnungen zur Aufnahme der Schenkel jeweils eines das Förderbandende durchdringenden Krampens aufweisen und der dem Krampensteg/Krampenrücken abgewandte Verbinderschenkel auf seiner Außenseite jeweils der Aufnahme eines der umgebogenen Krampenschenkelenden dienenden Vertiefung aufweist, die jeweils einen zur Öse und zum krampenstegseitigen Verbinderschenkel hin einwärts geneigte Bodenfläche aufweisen.

Aus der EP 3 183 473 B1 ist ebenfalls ein Förderbandbefestigungselement zum Zusammenspleißen von Enden eines Förderbandes sowie ein Verfahren zur Herstellung eines solchen Förderbandbefestigungselements offenbart.

Problematisch bei Verbinderelementen der eingangs genannten Art ist, dass im Langzeitbetrieb es insbesondere im Bereich der freien Krampenenden/Krampenschenkel zu einem Bruch der Krampen kommen kann. Dies insbesondere dadurch, dass beim Betrieb eines Gurts, dessen Enden mit derartigen Verbinderelementen verbunden sind, die Verbinderelemente in Kontakt mit Umlenk- und/oder Antriebs- und/oder Tragrollen zum Umlenken bzw. Antreiben der Bewegung des Gurts bzw. Bands kommen und somit insbesondere bei einer Belastung des Gurts mit Material die Verbinderelemente und insbesondere die Krampen bei Kontaktierung der Umlenk- und/oder Antriebsrollen einer besonders hohen mechanischen Belastung ausgesetzt sind. Insbesondere die umgebogenen Krampenenden bzw. freien Enden der Krampen sind einem hohen mechanischen Verschleiß ausgesetzt, da die Krampen typischerweise aus Federstahl bestehen und es dadurch beim Kontaktieren der Rollen und einer damit einhergehenden Schwingung dazu kommen kann, dass die Krampenenden besonders weit hervorstehen und in Kontakt mit der Rolle oder den Rollen geraten.

Im Langzeitbetrieb derartiger Verbinderelemente hat sich gezeigt, dass die Krampen und insbesondere die umgebogenen, freien Enden der Krampen eine Schwachstelle eines solchen Verbinderelements darstellen.

Aufgabe der vorliegenden Erfindung ist es daher, ein Verbinderelement, das die Merkmale des Oberbegriffs des Patentanspruchs 1 aufweist, derart weiterzubilden, dass die Krampen und insbesondere die freien Enden der Krampen besonders gut vor mechanischen Einflüssen geschützt sind. Aufgabe der Erfindung ist es ferner, ein Verfahren zur Herstellung eines solchen Verbinderelements anzugeben.

Diese Aufgaben werden durch ein Verbinderelement, das die Merkmale des Patentanspruchs 1 aufweist, und ferner durch ein Verfahren, das die Merkmale des Patentanspruchs 13 aufweist, gelöst.

Das erfindungsgemäße Verbinderelement ist dazu ausgebildet, an einem Ende eines Bands oder eines Gurts, insbesondere an dem Ende eines Förderbands oder Fördergurts, befestigt zu werden. Das Verbinderelement weist einen Grundkörper und zumindest zwei in dem Grundkörper gelagerte Krampen auf, wobei der Grundkörper einen ersten Endabschnitt und einen zweiten Endabschnitt sowie einen die Endabschnitte verbindenden Bogenabschnitt aufweist. Bei Verwendung eines derartigen Verbinderelements zum Verbinden von Enden eines Bands oder eines Gurts zwecks Herstellung eines Endlosbands bzw. Endlosgurts, werden an dem jeweiligen Ende des Bands bzw. Gurts typischerweise mehrere Verbinderelemente, die einen Gurtverbinder bilden, angeordnet, wobei die Bogenabschnitte derart angeordnet sind, dass die Bogenabschnitte der an dem einen Gurtende angeordneten Verbinderelemente mit den Bogenabschnitten der an dem anderen Gurtende angeordneten Verbinderelemente kämmen, sodass die Bogenabschnitte der Verbinderelemente eine in Querrichtung des Bands bzw. Gurts verlaufende Durchgangsöffnung bilden, wobei zum gelenkigen Verbinden der beiden Enden ein Kupplungsstab, beispielsweise ein Kupplungsstab aus Metall oder Kunststoff, in die Durchgangsöffnung eingeschoben wird, sodass eine gelenkige Verbindung zwischen den Verbinderelementen in Längsrichtung des Bands bzw. Gurts hergestellt ist. Die beiden Endabschnitte weisen Durchtrittsöffnungen für die Krampen auf, wobei der erste Endabschnitt auf einer dem Band bzw. Gurt abzuwendenden Seite eine erste Anlagefläche für freie Enden der jeweiligen Krampe und in einem Bereich zwischen den beiden ersten Anlageflächen eine erste Erhöhung aufweist, wobei ein Überstand der ersten Erhöhung gegenüber der jeweiligen ersten Anlagefläche zumindest einer Stärke der Krampe entspricht.

Somit steht die erste Erhöhung in einem mit dem Ende verbundenen Zustand des Verbinderelements auf einer dem Band bzw. Gurt abgewandten Seite des ersten Endabschnitts gegenüber den Krampenenden hervor oder schließt bündig mit diesen ab, sodass die Krampenenden besonders gut vor mechanischen Einflüssen, beispielsweise von Trag-, Antriebs-, und Umlenkrollen geschützt sind.

Unter Stärke der Krampen wird vorliegend insbesondere diejenige Ausdehnung der freien Enden der jeweiligen Krampe verstanden, die sich von der Anlagefläche in Richtung der Erhöhung erstreckt. Vorzugsweise ist die Krampe aus einem zweifach umgebogenen, stabförmigen Grundkörper gebildet. Vorzugsweise weist der stabförmige Grundkörper einen kreisförmigen Querschnitt auf. Unter Stärke der Krampe wird insbesondere der Durchmesser dieses kreisförmigen Querschnitts verstanden.

Zwecks Befestigen des Verbinderelements an dem Ende des Bands bzw. des Gurts wird das Ende des Bands bzw. Gurts in den Bereich zwischen den beiden Endabschnitten derart angeordnet, dass das Ende in Längsrichtung des Bands bzw. des Gurts beabstandet von dem Bogenabschnitt angeordnet ist, sodass noch Freiraum zum Einführen eines Kupplungsstabs zwecks Kupplung der Verbinderelemente gegeben ist. Anschließend werden die beiden Endabschnitte derart zusammengepresst, dass die beiden Endabschnitte an dem Gurt bzw. dem Band an gegenüberliegenden Seiten zur Anlage kommen und die Krampen werden durch den Gurt hindurchgetrieben, sodass die freien Enden der Krampen den ersten Endabschnitt durchsetzen und auf einer dem zweiten Endabschnitt abgewandten Seite des ersten Endabschnitts gegenüber dem ersten Endabschnitt hervorstehen. Anschließend werden diese freien Krampenenden umgebogen, um einen Formschluss herzustellen, wobei die beiden Krampenenden der jeweiligen Krampe zumindest beim Vorgang des Umbiegens in der Regel an der ersten Anlagefläche zur Anlage kommen. Die hervorstehenden Krampenenden werden vorzugsweise um etwa 90°, insbesondere zwischen 80° und 100° umgebogen. Es ist durchaus denkbar, dass die freien Enden der Krampen nach dem Umbiegen und dem Entfernen des Umbiegewerkzeugs sich ein Stück zurückbiegen aufgrund der Elastizität des Materials, aus dem die Krampen bestehen. Bei dem Material handelt es sich vorzugsweise um Federstahl. Es ist durchaus denkbar, dass sich die freien Enden nach einem Entfernen des Umbiegewerkzeugs derart zurückbiegen bzw. zurückverformen, dass die freien Enden nicht oder zumindest nicht vollständig an der Anlagefläche anliegen. Es ist durchaus denkbar, dass die Abwinkelung nach dem Entfernen des Biegewerkeugs weniger als 90° beträgt.

Es ist insbesondere vorgesehen, dass der Überstand der ersten Erhöhung gegenüber der jeweiligen ersten Anlagefläche größer ist als die Stärke der Krampen.

Um auch denjenigen Bereich der Krampe, der im Bereich des zweiten Endabschnitts angeordnet ist besonders gut zu schützen, ist vorgesehen, dass der zweite Endabschnitt auf einer dem Gurt bzw. dem Band abzuwendende Seite eine zweite Anlagefläche für einen Krampenrücken der jeweiligen Krampe aufweist und in einem Bereich zwischen den beiden zweiten Anlageflächen eine zweite Erhöhung aufweist, wobei ein Überstand der zweiten Erhöhung gegenüber der jeweiligen zweiten Anlagefläche zumindest der Stärke der Krampen entspricht.

Als besonders vorteilhaft wird es angesehen, wenn der Überstand der Erhöhung gegenüber der jeweiligen ersten und/oder der zweiten Anlagefläche das 1,0-Fache bis 1,5-Fache der Stärke der Krampen beträgt. Insbesondere ist vorgesehen, dass der Überstand das 1,05-Fache bis 1,15-Fache der Stärke der Krampen beträgt.

Es wird als besonders vorteilhaft angesehen, wenn die Stärke der Krampen zwischen 2 mm und 4 mm beträgt.

Eine Materialstärke des ersten Endabschnitts und/oder des zweiten Endabschnitts beträgt vorzugsweise das 0,9-Fache bis 1,2-Fache der Stärke der Krampen.

Um hohe Spannungen im Bereich des ersten Abschnitts bzw. des zweiten Abschnitts aufgrund der eingebrachten Erhöhung zu vermeiden, ist in einer bevorzugten Ausführungsform vorgesehen, dass die jeweilige erste Anlagefläche und/oder die jeweilige zweite Anlagefläche als Rücksprung ausgebildet ist. Das Vorsehen eines Rücksprungs hat den Vorteil, dass die freien Enden der Krampe bzw. der Krampenrücken im verbundenen Zustand bereits etwas tiefer in dem ersten Endabschnitt bzw. dem zweiten Endabschnitt angeordnet ist, sozusagen teilweise versenkt ist, sodass um einen ausreichenden Überstand der Erhöhung gegenüber der Anlagefläche zu erreichen, der Überstand der Erhöhung geringer ausgebildet sein kann, wodurch zum einen die Fertigung des Verbinderelements erleichtert wird und zum anderen Materialspannungen im Bereich des ersten Endabschnitts bzw. des zweiten Endabschnitts vermieden werden, da die Erhöhung geringer ausgeprägt sein kann.

Es hat sich gezeigt, dass gerade die Kombination der Erhöhung mit einem Rücksprung zu einer besonders geringen Bruchgefahr im Bereich des jeweiligen Endabschnitts führt. Vorzugsweise beträgt eine Tiefe des Rücksprungs das 0,02-Fache bis 0,2-Fache, vorzugsweise das das 0,02-Fache bis 0,05-Fache der Stärke der Krampen.

Die Gestaltung mit einer Erhöhung und einem Rücksprung hat sich auch insbesondere im Hinblick auf ein Herstellungsverfahren mittels Prägen der Erhöhung und Prägen des Rücksprungs als vorteilhaft erwiesen, insbesondere in Hinblick auf eine Haltbarkeit und einem Verschleiß der Prägewerkzeuge.

Als besonders vorteilhaft wird es angesehen, wenn der erste Endabschnitt und/oder der zweite Endabschnitt auf seiner der Erhöhung abgewandten Seite eine Vertiefung aufweist, insbesondere die Erhöhung durch eine die Vertiefung bildende rückseitige Einprägung gebildet ist.

Als besonders vorteilhaft wird es angesehen, wenn die Erhöhung durch eine Prägung und/oder durch ein Fließpressen gebildet ist. Ein Prägen und/oder Fließpressen hat sich hinsichtlich einer besonders hohen Materialstabilität als vorteilhaft erwiesen.

Um die Biegespannungen und somit die Bruchgefahr im Bereich des ersten Endabschnitts bzw. zweiten Endabschnitts besonders gering zu halten, hat es sich als vorteilhaft erwiesen, wenn der erste Endabschnitt zwei gegenüberliegende Außenkanten aufweist, wobei der erste Endabschnitt auf seiner dem Band oder Gurt abzuwendenden Seite im Bereich zwischen der jeweiligen Außenkante und der daran angrenzenden ersten Anlagefläche frei von einer Erhöhung ist. Es ist aber auch denkbar. Dass der erste Endabschnitt dort eine weitere Erhöhung aufweist, wobei ein Überstand der weiteren Erhöhung gegenüber der jeweiligen ersten Anlagefläche geringer ist als der Überstand der ersten Erhöhung, insbesondere maximal das 0,5-Fache des Überstands der ersten Erhöhung beträgt. Die Ausführungen gelten entsprechend für die Gestaltung des zweiten Endabschnitts.

Als besonders vorteilhaft wird es angesehen, wenn der erste Endabschnitt und/oder der zweite Endabschnitt im Bereich der jeweiligen Erhöhung einen im Wesentlichen V-förmigen Querschnitt aufweist.

Vorzugsweise weist das Verbinderelement genau zwei Krampen auf. Diese Gestaltung des Verbinderelements hat den Vorteil, dass der Grundkörper besonders und einfach und kostengünstig herstellbar ist, insbesondere Prägewerkzeuge zur Herstellung des Verbinderelements besonders kostengünstig herstellbar sind und zudem eine hohe Langzeitstabilität aufweisen.

Vorzugsweise weist der erste Endabschnitt und/oder der zweite Endabschnitt jeweils genau eine erste bzw. zweite Erhöhung auf.

Als besonders vorteilhaft wird es angesehen, wenn der Bogenabschnitt zumindest zwei den ersten und den zweiten Endabschnitt verbindende, voneinander beabstandete, bogenförmige Segmente aufweist. Insbesondere entspricht eine Anzahl der bogenförmigen Segmente einer Anzahl der Krampen.

Vorzugsweise beträgt eine Materialstärke der Segmente das 1,0-Fache bis 1,5-Fache der Stärke der Krampen. Also besonders vorteilhaft wird es angesehen, wenn eine Materialstärke der Segmente das 1,05-Fache bis 1,15-Fache der Stärke der Krampen beträgt.

Als besonders vorteilhaft wird es angesehen, wenn das Verbinderelement derart gestaltet ist, dass eine in Längsrichtung des Verbinderelements verlaufende Oberkante der ersten und/oder zweiten Erhöhung und eine Oberkante des Bogenabschnitts in ein und derselben Ebene ausgebildet sind. Dadurch wird die mechanische Belastung des Verbinderelements beim Kontaktieren von Umlenk- oder Antriebsrollen vermindert, insbesondere werden Schläge vermieden, da quasi eine Auflageebene gebildet ist, sodass eine unmittelbare Kontaktierung der Krampenrücken und/oder Krampenenden vermieden wird.

Als besonders vorteilhaft wird es angesehen, wenn der Grundkörper, insbesondere das Verbinderelement, spiegelsymmetrisch zu einer senkrecht zu der Querrichtung des Verbinderelements verlaufenden Ebene ausgebildet ist. Die symmetrische Gestaltung hat den Vorteil, dass ein Verdrehen des Verbinderelements beim Einwirken einer in Längsrichtung verlaufenden Kraft vermieden wird.

In einer bevorzugten Ausführungsform ist vorgesehen, dass die erste Erhöhung und/oder die zweite Erhöhung eine geneigte Anlaufkante aufweist. Insbesondere ist vorgesehen, dass die erste Erhöhung und/oder die zweite Erhöhung und/oder der Bogenabschnitt im Übergangsbereich zwischen dem Endabschnitt und dem Bogenabschnitt eine geneigte Anlaufkante aufweist.

Vorzugsweise ist ein Gurtverbinder zum Befestigen an einem Ende eines Bands oder eines Gurts derart gestaltet, dass der Gurtverbinder eine Vielzahl von erfindungsgemäßen Verbinderelementen aufweist, insbesondere die Verbinderelemente über einen mit den Verbinderelementen verbundenen Verbindungsstab, insbesondere mit den Verbinderelementen verschweißten Verbindungsstab, miteinander verbunden sind.

Es wird als besonders vorteilhaft angesehen, wenn in dem Bereich zwischen den benachbarten Krampen aneinander angrenzenden Verbinderelemente keine Erhöhung in Art einer ersten Erhöhung oder zweiten Erhöhung ausgebildet ist. Es hat sich gezeigt, dass die außenliegenden Krampen der Verbinderelemente ausreichend durch die übrigen ersten bzw. zweiten Erhöhungen geschützt sind, sodass auf eine Erhöhung zwischen den benachbarten Krampen aneinander angrenzenden Verbinderelemente verzichtet werden kann. Dadurch kann Material gespart und der Fertigungsaufwand verringert werden. Zudem werden zu hohe Spannungen in dem jeweiligen Grundkörper vermieden.

Das erfindungsgemäße Verfahren zur Herstellung der ersten Erhöhung und/oder der zweiten Erhöhung des Verbinderelements weist zumindest die folgenden Verfahrensschritte auf:
- Bereitstellen eines streifenförmigen Ausgangskörpers mit zwei gegenüberliegenden Hauptausdehnungsflächen,
- Einprägen der ersten Erhöhung und/oder der zweiten Erhöhung, wobei das Einprägen der ersten Erhöhung und/oder der zweiten Erhöhung in zumindest zwei Prägeschritten unter Verwendung unterschiedlicher Prägewerkzeuge erfolgt, wobei in dem jeweiligen Prägeschritt der Ausgangskörper zwischen einem Prägeunterteil und einem Prägeoberteil des jeweiligen Prägewerkzeugs derart angeordnet wird, dass die eine Hauptausdehnungsfläche dem Prägeunterteil und die andere Hauptausdehnungsfläche dem Prägeoberteil zugewandt ist, wobei das Prägeunterteil einen Vorsprung und das Prägeoberteil einen Rücksprung aufweist.

Durch das schrittweise Einprägen der Erhöhung werden die Belastungen des Materials des Ausgangskörpers und des jeweiligen Prägewerkzeugs reduziert, sodass eine Zerstörung oder ein erhöhter Verschleiß vermieden werden. Zudem hat das zumindest zweischrittige Vorgehen den Vorteil, dass mit einer geringeren Prägekraft geprägt werden kann als dies bei der Verwendung von nur einem Prägewerkzeug der Fall wäre. Es ist durchaus denkbar, dass sich die Prägewerkzeuge nur durch die Gestaltung der jeweils verwendeten Prägeunterteile und Prägeoberteile unterscheiden. Insbesondere ist es denkbar, dass in beiden Prägeschritten ein und derselbe Zustellmechanismus verwendet wird und sich nur die verwendeten Prägeunterteile und Prägeoberteile unterscheiden.

In den nachfolgenden Figuren wird die Erfindung anhand von Ausführungsbeispielen näher erläutert, ohne auf diese beschränkt zu sein. Es zeigen:
- Fig. 1: eine Ausführungsform des erfindungsgemäßen Verbinderelements in einer perspektivischen Ansicht,
- Fig. 2: einen Gurtverbinder, gebildet aus einer Vielzahl von Verbinderelementen gemäß Fig. 1 in einer perspektivischen Ansicht,
- Fig. 3: der Gurtverbinder gemäß Fig. 2 in einem mit einem Gurtende verbundenen Zustand in einer perspektivischen Ansicht,
- Fig. 4: die Anordnung gemäß Fig. 3 in einer weiteren perspektivischen Ansicht,
- Fig. 5: die Anordnung gemäß Fig. 3 in einer Schnittansicht,
- Fig. 6: ein Verbinderelement der Anordnung gemäß Fig. 4 in einer isolierten Schnittansicht,
- Fig. 7: ein Grundkörper des Verbinderelements gemäß Fig. 1 in einem aufgebogenen Zustand in einer perspektivischen Ansicht,
- Fig. 8: ein Prägewerkzeug einer Anlage zur Herstellung des Grundkörpers gemäß Fig. 7 in einer Seitenansicht,

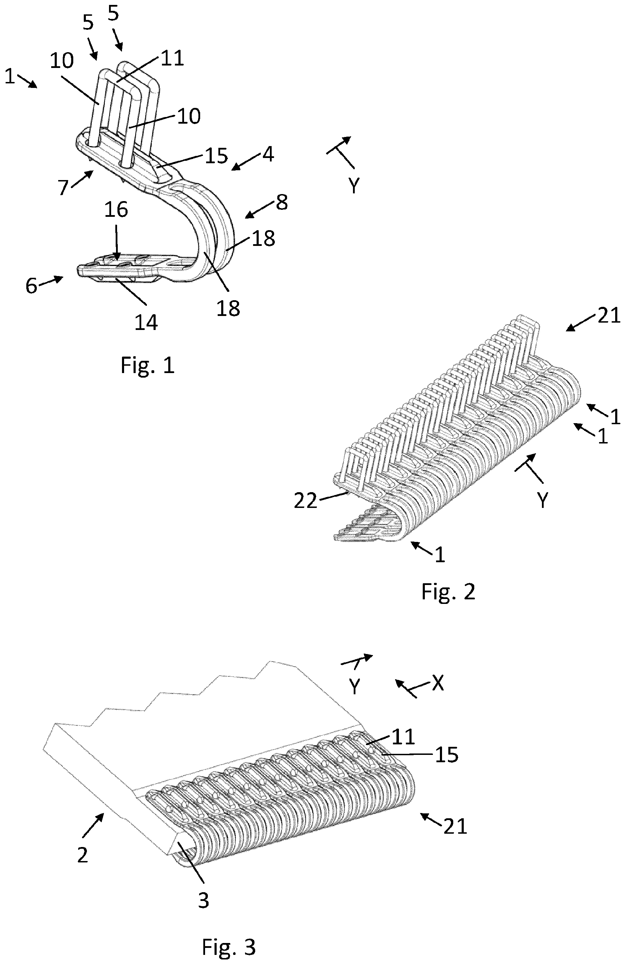

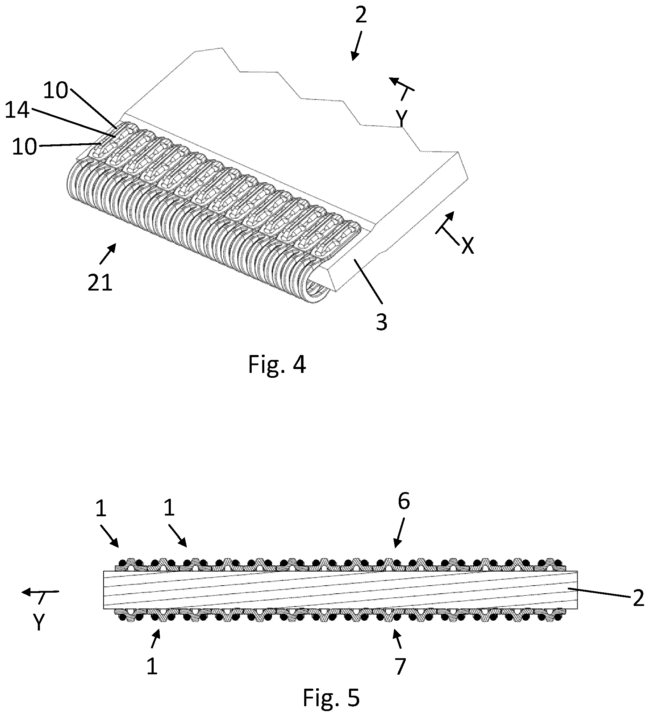

Die Fig. 1 bis 7 zeigen eine Ausführungsform eines erfindungsgemäßen Verbinderelements 1 zum Befestigen an einem Ende 3 eines Gurts 2. Bei dem Gurt 2 handelt es sich vorliegend um einen Fördergurt. Das Verbinderelement 1 wird zusammen mit weiteren Verbinderelementen 1 verwendet, wobei diese Verbinderelemente 1 über einen mit den Verbinderelementen 1 verschweißten Verbindungsstab 22 miteinander verbunden sind und einen Gurtverbinder 21 bilden. Dieser Gurtverbinder 21 wird mit dem Ende 3 des Gurts 2 verbunden, wie dies in den Fig. 3 und 4 gezeigt ist.

Das jeweilige Verbinderelement 1 weist einen Grundkörper 4 und zwei in dem Grundkörper 4 gelagerte Krampen 5 auf, wobei der Grundkörper 4 einen ersten Endabschnitt 6 und einen zweiten Endabschnitt 7 sowie einen die Endabschnitte 6, 7 verbindenden Bogenabschnitt 8 aufweist.

Der Bogenabschnitt 8 des jeweiligen Verbinderelements 1 weist zwei den ersten und den zweiten Endabschnitt verbindende, voneinander beabstandete, bogenförmige Segmente 18 auf, wobei diese bogenförmigen Segmente 18 beim Herstellen einer Verbindung der Gurtenden 3 des Gurts 2 derart angeordnet werden, dass die bogenförmigen Segmente 18 des Gurtverbinders 21, der mit dem einen Gurtende 3 verbunden ist, mit den bogenförmigen Segmenten 18 des Gurtverbinders 21, der mit dem anderen Gurtende 3 verbunden ist, kämmen, sodass im Bereich zwischen den bogenförmigen Segmenten 18 eine in Y-Richtung verlaufende Durchgangsöffnung zum Einstecken eines Kupplungsstabs gebildet ist.

Die beiden Endabschnitte 6, 7 weisen Durchtrittsöffnungen 9 für Krampen 5 auf. Die Krampen 5 sind vor dem Verbinden des Verbinders 1 mit dem Gurt 2 nur in dem zweiten Endabschnitt 7 gelagert, wobei die Krampen 5 dadurch gehalten sind, dass freie Enden 10 der Krampen 5 die Durchtrittsöffnungen 9 des zweiten Endabschnitts 7 durchsetzen, wobei die Krampenenden 10 in der jeweiligen Durchgangsöffnung 9 in Art einer Presspassung gehalten sind. In dem unverbundenen Zustand stehen die Krampenenden 10 mit ihren Spitzen nur geringfügig gegenüber einer dem ersten Endabschnitt 6 zugewandten Rückseite des zweiten Endabschnitts 7 hervor.

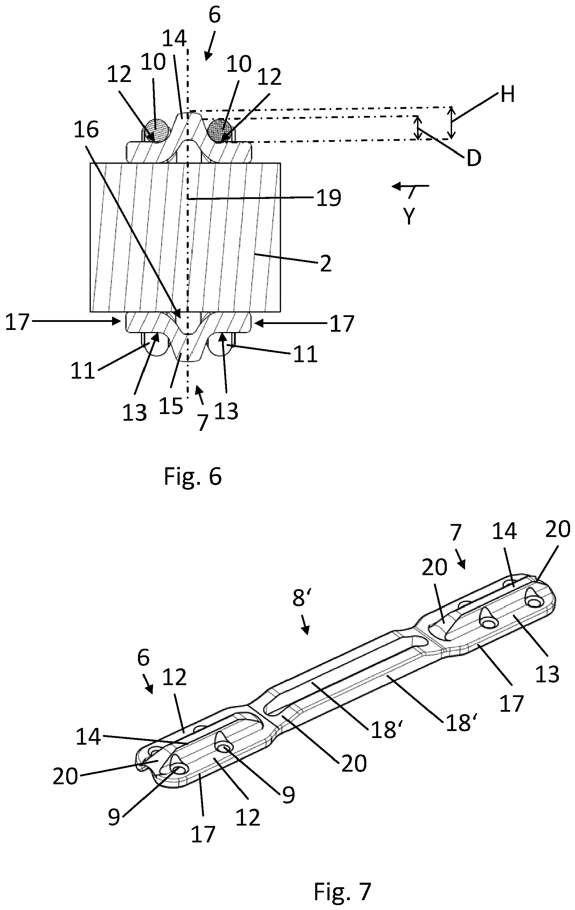

Der erste Endabschnitt 6 weist auf einer dem Gurt 2 abzuwendenden Seite eine erste Anlagefläche 12 für die freien Enden 10 der jeweiligen Krampe 5 und in einem Bereich zwischen den beiden ersten Anlageflächen 12 eine erste Erhöhung 14 auf, wobei ein Überstand H der ersten Erhöhung 14 gegenüber der jeweiligen ersten Anlagefläche 12 größer ist als eine Stärke D der Krampen 5. Dies ist insbesondere der Fig. 6 zu entnehmen.

Die ersten Endabschnitte 6, 7 sind im Wesentlichen identisch gestaltet, sodass der zweite Endabschnitt 7 auf einer dem Gurt abzuwendenden Seite eine zweite Anlagefläche 13 aufweist, nämlich eine Anlagefläche für einen Krampenrücken 11 der jeweiligen Krampe 5, und in einem Bereich zwischen den beiden zweiten Anlageflächen 13 eine zweite Erhöhung 15 aufweist, wobei ein Überstand H der zweiten Erhöhung 15 gegenüber der jeweiligen zweiten Anlagefläche 13 größer ist als die Stärke D der Krampen5. Vorliegend beträgt der Überstand H der jeweiligen Erhöhung 14, 15 gegenüber der jeweiligen ersten bzw. der jeweiligen zweiten Anlagefläche 12, 13 in etwa dem 1,2-Fachen der Stärke D der Krampen 5.

Vorliegend ist die jeweilige Erhöhung 14, 15 durch eine rückseitige Einprägung gebildet, sodass der erste und der zweite Endabschnitt 6, 7 gegenüberliegend von der jeweiligen Erhöhung 14, 15 eine Vertiefung 16 aufweist.

Vorliegend weist der erste Endabschnitt 6 zwei gegenüberliegende Außenkanten 17 auf, wobei der erste Endabschnitt 6 von der Außenkante 17 bis zu der Erhöhung 14 im Wesentlichen eben ausgebildet ist. Entsprechendes gilt für den zweiten Endabschnitt 7.

Die erste Erhöhung 14 und die zweite Erhöhung 15 weisen jeweils in Längsrichtung X gegenüberliegende Anlaufkanten 20 auf. Zudem weist der Bogenabschnitt 8 ebenfalls eine Anlaufkante 20 auf.

Vorliegend ist das Verbinderelement 2 spiegelsymmetrisch zu einer senkrecht zu der Querrichtung Y verlaufenden Ebene 19 ausgebildet.

Wie insbesondere der Fig. 7 zu entnehmen ist, sind in dem Bereich zwischen benachbarten Krampen 5 aneinander angrenzenden Verbinderelemente 1 keine Erhöhungen in Art einer ersten Erhöhung oder zweiten Erhöhung ausgebildet.

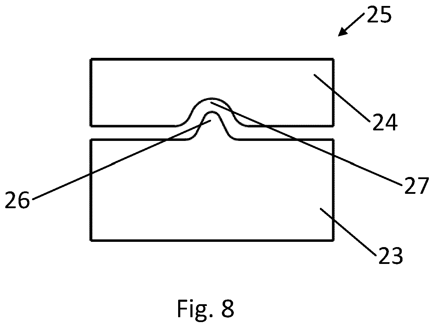

Die Fig. 8 zeigt ein Prägewerkzeug 25, das in einer Anlage zur Herstellung des Grundkörpers 4 des Verbinderelements 1 Verwendung finden kann. Das Prägewerkzeug 25 dient vorliegend dem Einprägen der ersten Erhöhung 14 und dem Einprägen der zweiten Erhöhung 15, wobei zu diesem Zweck ein, ggf. vorgeprägter, streifenförmiger Ausgangskörper mit zwei gegenüberliegenden Hauptausdehnungsflächen in den Bereich zwischen einem Prägeunterteil 23 und einem Prägeoberteil 24 des Prägewerkzeugs 25 derart angeordnet wird, dass eine Hauptausdehnungsfläche des Ausgangskörpers dem Prägeunterteil 23 und die andere Hauptausdehnungsfläche dem Prägeoberteil 24 zugewandt ist. Das Prägeunterteil 23 weist vorliegend einen Vorsprung 26 und das Prägeoberteil 24 einen korrespondierenden Rücksprung 27 auf. Beim Zustellen der beiden Prägeteile 23, 24 zueinander, wird in den Ausgangskörper die Erhöhung 14 und/oder die Erhöhung 15 eingeprägt.

Es ist durchaus denkbar, dass zur Herstellung des Grundkörpers aus dem Ausgangskörper weitere Verfahrensschritte folgen, beispielsweise weitere Prägeschritte, Stanzschritte, Umbiegeschritte folgen.

Die Fig. 7 zeigt einen bearbeiteten Ausgangskörper, nachdem bereits eine Vielzahl von Verfahrensschritten zur Herstellung des Grundkörpers ausgeführt wurden. Bei dem in der Fig. 7 gezeigten bearbeiteten Ausgangskörper fehlt lediglich noch der Verfahrensschritt des Umbiegens des geradförmigen Abschnitts 8' mit den beiden geradförmigen Segmenten 18' zwecks Bildung des Bogenabschnitts 8 bzw. der bogenförmigen Segmente 18. Wenn ein Gurtverbinder 21 hergestellt werden soll, werden allerdings vor dem Bilden des Bogenabschnitts 8 mehrere der in der Fig. 7 gezeigten bearbeiteten Ausgangskörper miteinander verbunden, beispielsweise mittels Anschweißen eines Verbindungsstabs. Erst nach dem Verbinden der bearbeiteten Ausgangskörper erfolgt das gemeinsame Umbiegen des Abschnitts 8' zur Bildung des Gurtverbinders 21.

### Bezugszeichenliste

- 1: Verbinderelement
- 2: Gurt
- 3: Ende
- 4: Grundkörper
- 5: Krampe
- 6: erster Endabschnitt
- 7: zweiter Endabschnitt
- 8: Bogenabschnitt
- 9: Durchtrittsöffnung
- 10: freies Ende
- 11: Krampenrücken
- 12: erste Anlagefläche
- 13: zweite Anlagefläche
- 14: erste Erhöhung
- 15: zweite Erhöhung
- 16: Vertiefung
- 17: Außenkante
- 18: Segment
- 19: Ebene
- 20: Anlaufkante
- 21: Gurtverbinder
- 22: Verbindungsstab
- 23: Prägeunterteil
- 24: Prägeoberteil
- 25: Prägewerkzeug
- 26: Vorsprung
- 27: Rücksprung
- H: Überstand
- D: Stärke

## Patentansprüche

1. Verbinderelement (1) zum Befestigen an einem Ende (3) eines Bands oder eines Gurts (2), wobei das Verbinderelement (1) einen Grundkörper (4) und zumindest zwei in dem Grundkörper (4) gelagerten Krampen (5) aufweist, wobei der Grundkörper (4) einen ersten Endabschnitt (6) und einen zweiten Endabschnitt (7) sowie einen die Endabschnitte (6, 7) verbindenden Bogenabschnitt (8) aufweist, wobei die beiden Endabschnitte (6, 7) Durchtrittsöffnungen (9) für die Krampen (5) aufweisen, wobei der erste Endabschnitt (6) auf einer dem Band bzw. Gurt (2) abzuwendenden Seite eine erste Anlagefläche (12) für freie Enden (10) der jeweiligen Krampe (5) und in einem Bereich zwischen den beiden ersten Anlageflächen (12) eine erste Erhöhung (14) aufweist, **dadurch gekennzeichnet, dass** ein Überstand (H) der ersten Erhöhung (14) gegenüber der jeweiligen ersten Anlagefläche (12) zumindest einer Stärke (D) der Krampen (5) entspricht.

2. Verbinderelement nach Anspruch 1, wobei der zweite Endabschnitt (7) auf einer dem Band oder Gurt (3) abzuwendenden Seite eine zweite Anlagefläche (13) für einen Krampenrücken (11) der jeweiligen Krampe (5) und in einem Bereich zwischen den beiden zweiten Anlageflächen (13) eine zweite Erhöhung (15) aufweist, wobei ein Überstand der zweiten Erhöhung (15) gegenüber der jeweiligen zweiten Anlagefläche (13) zumindest der Stärke (D) der Krampen (5) entspricht.

3. Verbinderelement nach Anspruch 1 oder 2, wobei der Überstand der Erhöhung (14, 15) gegenüber der jeweiligen ersten und/oder der jeweiligen zweiten Anlagefläche (12, 13) das 1,0-fache bis 1,5-fache der Stärke (D) der Krampen (5) beträgt, vorzugsweise das 1,05-fache bis 1,15-fache der der Stärke (D) der Krampen (5) beträgt.

4. Verbinderelement nach einem der Ansprüche 1 bis 3, wobei die jeweilige erste Anlagefläche (12) und/oder die jeweilige zweite Anlagefläche (13) durch einen Rücksprung gebildet ist.

5. Verbinderelement nach einem der Ansprüche 1 bis 4, wobei der erste und/oder der zweite Endabschnitt (6, 7) auf seiner der Erhöhung (14, 15) abgewandten Seite eine Vertiefung (16) aufweist, insbesondere die Erhöhung (14, 15) durch eine die Vertiefung bildende rückseitige Einprägung gebildet ist.

6. Verbinderelement nach einem der Ansprüche 1 bis 5, wobei der erste Endabschnitt (6) zwei gegenüberliegende Außenkanten (17) aufweist, wobei der erste Endabschnitt (6) auf seiner dem Band oder Gurt (3) abzuwendenden Seite im Bereich zwischen der jeweiligen Außenkante (17) und der daran angrenzenden ersten Anlagefläche (12) frei von einer Erhöhung ist oder eine weitere Erhöhung aufweist, wobei ein Überstand der weiteren Erhöhung gegenüber der jeweiligen ersten Anlagefläche (12) geringer ist als der Überstand (H) der ersten Erhöhung (14), und/oder der zweite Endabschnitt (7) zwei gegenüberliegende Außenkanten (17) aufweist, wobei der zweite Endabschnitt (7) auf seiner dem Band oder Gurt (3) abzuwendenden Seite im Bereich zwischen der jeweiligen Außenkante (17) und der daran angrenzenden zweiten Anlagefläche (13) frei von einer Erhöhung ist oder eine weitere Erhöhung aufweist, wobei ein Überstand der weiteren Erhöhung gegenüber der jeweiligen zweiten Anlagefläche (13) geringer ist als der Überstand der zweiten Erhöhung (15).

7. Verbinderelement nach Anspruch 6, wobei das Verbinderelement (1) genau zwei Krampen (5) aufweist.

8. Verbinderelement nach einem der Ansprüche 1 bis 7, wobei der Bogenabschnitt (8) zumindest zwei den ersten und den zweiten Endabschnitt (12, 13) verbindende, voneinander beabstandete, bogenförmige Segmente (18) aufweist, insbesondere der Bogenabschnitt (8) eine der Anzahl der Krampen (5) entsprechende Anzahl von bogenförmigen Segmenten (18) aufweist.

9. Verbinderelement nach Anspruch 8, wobei eine Materialstärke der Segmente das 1,0-fache bis 1,5-fache der Stärke der Krampen beträgt, vorzugsweise das 1,05-fache bis 1,15-fache der der Stärke (D) der Krampen(5) beträgt.

10. Verbinderelement nach einem der Ansprüche 1 bis 9, wobei der Grundkörper (4), insbesondere das Verbinderelement (1), spiegelsymmetrisch zu einer senkrecht zu der Querrichtung (Y) verlaufenden Ebene (19) ausgebildet ist.

11. Verbinderelement nach einem der Ansprüche 1 bis 10, wobei die erste Erhöhung (14) und/oder die zweite Erhöhung (15) eine geneigte Anflaufkante (20) aufweist, insbesondere die erste Erhöhung (14) und/oder die zweite Erhöhung (15) und/oder der Bogenabschnitt (8) im Übergangsbereich zwischen dem Endabschnitt (6, 7) und dem Bogenabschnitt (8) eine geneigte Anflaufkante (20) aufweist.

12. Gurtverbinder (21) zum Befestigen an einem Ende (3) eines Bands oder eines Gurts (2), wobei der Gurtverbinder (21) eine Vielzahl von Verbinderelementen (1) nach einem der Ansprüche 1 bis 11 aufweist, wobei die Verbinderelemente (1) über einen mit den Verbinderelementen (1) verschweißten Verbindungsstab (22) miteinander verbunden sind.

13. Verfahren zur Herstellung der ersten Erhöhung (14) und/oder der zweiten Erhöhung (15) des Verbinderelements (1) nach einem der Ansprüche 1 bis 11, wobei das Verfahren die folgenden Verfahrensschritte aufweist:
- Bereitstellen eines streifenförmigen Ausgangskörpers mit zwei gegenüberliegenden Hauptausdehnungsflächen,
- Einprägen der ersten Erhöhung (14) und/oder der zweiten Erhöhung (15), wobei das Einprägen der ersten Erhöhung (14) und/oder der zweiten Erhöhung (15) in zumindest zwei Prägeschritten unter Verwendung unterschiedlicher Prägewerkzeuge (25) erfolgt, wobei in dem jeweiligen Prägeschritt der Ausgangskörper zwischen einem Prägeunterteil (23) und einem Prägeoberteil (24) des jeweiligen Prägewerkzeugs (25) derart angeordnet wird, dass die eine Hauptausdehnungsfläche dem Prägeunterteil (23) und die andere Hauptausdehnungsfläche dem Prägeoberteil (24) zugewandt ist, wobei das Prägeunterteil (23) einen Vorsprung (26) und das Prägeoberteil (24) einen Rücksprung (27) aufweist.
